(19) **Europäisches Patentamt / European Patent Office / Office européen des brevets**

(11) **EP 3 924 901 B1**

(12) **EUROPEAN PATENT SPECIFICATION**

(45) Date of publication and mention
of the grant of the patent:
**26.11.2025 Bulletin 2025/48**

(21) Application number: **19914994.9**

(22) Date of filing: **15.02.2019**

(51) International Patent Classification (IPC):
**G06N 3/08** (2023.01)    **G06N 20/20** (2019.01)
**B60W 30/095** (2012.01)    **B60W 60/00** (2020.01)
**G06N 7/00** (2023.01)    G05D 1/00 (2024.01)
**G08G 1/01** (2006.01)

(52) Cooperative Patent Classification (CPC):
**G06N 3/08; G06N 3/0499; G06N 3/09; G06N 3/091;
G06N 3/0985; G06N 20/20; G08G 1/0112;
G08G 1/0129; G08G 1/0133;** G06N 7/01

(86) International application number:
**PCT/CN2019/075158**

(87) International publication number:
**WO 2020/164089 (20.08.2020 Gazette 2020/34)**

(54) **TRAJECTORY PREDICTION USING DEEP LEARNING MULTIPLE PREDICTOR FUSION AND BAYESIAN OPTIMIZATION**

TRAJEKTORIEVORHERSAGE UNTER VERWENDUNG VON
TIEFENLERN-MULTIPRÄDIKTORFUSION UND BAYESISCHER OPTIMIERUNG

PRÉDICTION DE TRAJECTOIRE UTILISANT UNE FUSION DE PRÉDICTEURS MULTIPLES À
APPRENTISSAGE PROFOND ET UNE OPTIMISATION BAYÉSIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.12.2021 Bulletin 2021/51**

(73) Proprietor: **Bayerische Motoren Werke
Aktiengesellschaft
80809 München (DE)**

(72) Inventors:
• **GE, Yao**
**Shanghai 200122 (CN)**
• **DOEMLING, Maximilian**
**Shanghai 200336 (CN)**
• **HAUSER, Niklas**
**80788 Munchen (DE)**
• **XU, Gaowei**
**Taizhou, Jiangsu 225300 (CN)**

(56) References cited:
WO-A1-2018/118112    CN-A- 106 950 956
CN-A- 106 950 956    CN-A- 108 803 617
CN-A- 109 272 108    US-A1- 2018 173 240
US-A1- 2018 374 341

• GUO FANGCE ET AL: "Predictor fusion for short-term traffic forecasting", TRANSPORTATION RESEARCH PART C:EMERGING TECHNOLOGIES, vol. 92, 6 May 2018 (2018-05-06), GB, pages 90 - 100, XP055955878, ISSN: 0968-090X, DOI: 10.1016/j.trc.2018.04.025

## Description

FIELD OF THE INVENTION

The present disclosure relates in general to automated driving vehicles, and in more particular, to trajectory predictions using deep learning multiple predictor fusion and Bayesian optimization.

BACKGROUND OF THE INVENTION

An automated driving vehicle (also known as a driverless car, self-driving car, or robotic car) is a kind of vehicle that is capable of sensing its environment and navigating without human input. Automated driving vehicles (hereinafter, called as ADV) use a variety of techniques to detect their surroundings, such as radar, laser light, GPS, odometry and computer vision. Advanced control systems interpret sensory information to identify appropriate navigation paths, as well as obstacles and relevant signage.

To achieve a high level (Level 3-5) autonomous driving, the future trajectory of objects should be precisely modelled for driving strategy decision and collision avoidance. Most conventional methods for trajectory prediction generates point estimation for specific future timestamp. Also, most methods for trajectory prediction focus on single motion models. Generally, the current methods can be categorized into the following four types:

(1) Physics-based motion models;

(2) Maneuver/Behavior-based motion models:

(3) Interaction-aware motion models: and

(4) A priori knowledge motion models.

They all have their individual strengths, but lack the ability to reliably predict real object trajectories since real objects in autonomous driving environment generally have mixed maneuver behavior.

In addition, current methods for trajectory prediction have still other disadvantages. Most methods give only point estimation, but other useful statistics like variance are not available. Also, predictor built upon a certain maneuver model may not able to handle the mixed maneuver behavior of real objects in autonomous driving environment

Therefore, an improved solution of trajectory prediction is desired for automated driving vehicles.

GUO FANGCE ET AL: "Predictor fusion for short-term traffic forecasting", TRANSPORTATION RESEARCH PART C:EMERGING TECHNOLOGIES, [Online] vol. 92, 6 May 2018 (2018-05-06), pages 90-100, GB ISSN: 0968-090X, DOI: 10.1016/j.trc.2018.04.025 discloses fusion of predictors to predict traffic conditions.

US 2018/173240 A1 discloses a computer-based method for operating autonomous vehicle, involves controlling autonomous vehicle based on predicted trajectories of identified vehicles using a trained neural network.

CN 106 950 956 A discloses Driving trajectory predicting system that fuses a kinematic model and a behavioral cognition model.

SUMMARY OF THE INVENTION

The present disclosure aims to provide a method, an apparatus and a vehicle for trajectory prediction. The invention is set out in the appended set of claims.

With the above method, apparatus and vehicle for trajectory prediction, at least the following advantages may be achieved with respect to the prior art methods:

(1) Through confidence weighed estimation, more statistics besides point estimation could be attained;
(2) Multiple predictors based on different maneuver models are used to handle the mixed maneuver behavior of real objects:
(3) Deep neural network is used for effective multiple prediction fusion. The network can use both predictor output, environmental information and predictor statistics to fuse multiple outputs. The framework parameter is tuned through optimization rather than trial-and-error; and
(4) The overall hyper-parameter is tuned systematically through Bayesian optimization based active learning.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

BRIEF DESCRIPTION OF THE DRAWINGS

The above and other aspects and advantages of the present disclosure will become apparent from the following detailed description of exemplary embodiments taken in conjunction with the accompanying drawings which illustrate, by way of example, the principles of the present disclosure. Note that the drawings are not necessarily drawn to scale.

Fig. 1 illustrates an exemplary road environment.

Fig. 2 shows a schematic block diagram of a hybrid predictor in accordance with one embodiment of the present invention.

Fig. 3 shows a schematic diagram of how to train a fusion model for trajectory prediction in accordance with one embodiment of the present invention.

Fig. 4 is a flow diagram of a method for training a multiple predictor fusion model for trajectory prediction in accordance with one embodiment of the present invention.

Fig. 5 is a flow diagram of a method for tuning hyperparameters of a neural network in accordance with one embodiment of the present invention.

Fig. 6 is a flow diagram of a method for trajectory prediction in accordance with one embodiment of the present invention.

Fig. 7 shows a schematic diagram of an exemplary confidence weighed estimation algorithm in accordance with one embodiment of the present invention.

Fig. 8 shows a schematic block diagram of a trajectory prediction apparatus in accordance with one embodiment of the present invention.

Fig. 9 illustrates a computing system in accordance with an exemplary embodiment of the present disclosure.

Fig. 10 illustrates an exemplary vehicle according to an embodiment of the present invention.

DETAILED DESCRIPTION

In the following detailed description, numerous specific details are set forth to provide a thorough understanding of the described exemplary embodiments. It will be apparent, however, to one skilled in the art that the described embodiments can be practiced without some or all of these specific details. In other exemplary embodiments, well known structures or process steps have not been described in detail in order to avoid unnecessarily obscuring the concept of the present disclosure.

The term "vehicle" used through the specification refers to cars of any type, including but not limited to sedans, vans, trucks, buses, or the like. For simplicity, the invention is described with respect to "car". The term "A or B" used through the specification refers to "A and B" and "A or B" rather than meaning that A and B are exclusive, unless otherwise specified.

As mentioned before, there are several methods of trajectory prediction in the prior art, which can be typically categorized into the following four types: physics-based motion models; maneuver/behavior-based motion models; interaction-aware motion models; and a priori knowledge motion models. For example, roadmodel-based trajectory prediction is a typical a priori knowledge motion model, and movement-history-based trajectory prediction is a typical maneuver/behavior-based motion model.

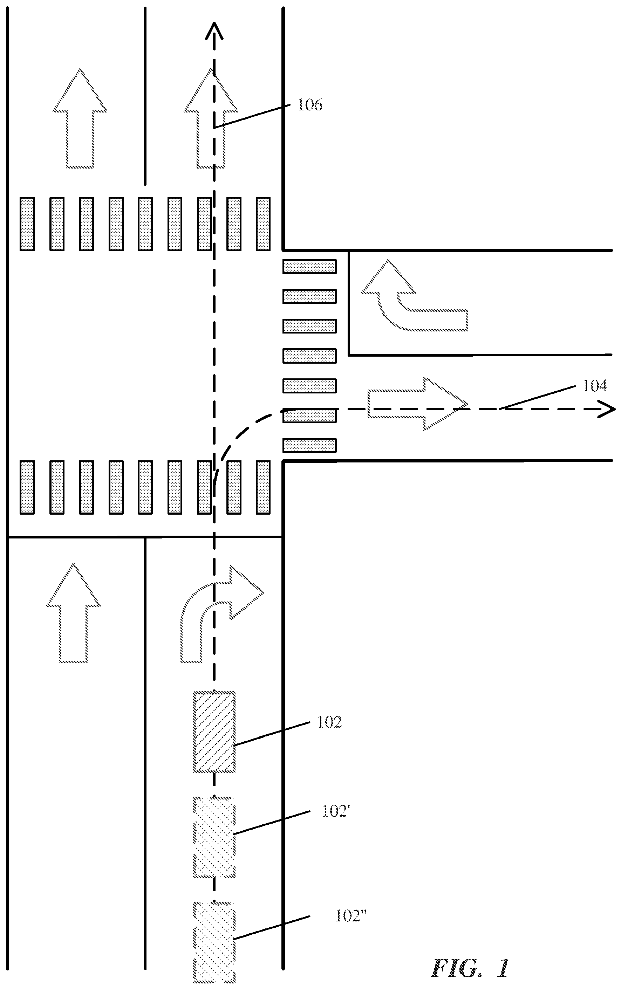

The roadmodel-based trajectory prediction is based on existing road models, and thus, apparently, such trajectory prediction is only suitable for those areas where road models exist. Also, it is only applicable to automobiles. In addition, such kind of trajectory prediction also assumes that cars comply with traffic rules, for example, cars will travel along the centerlines of lanes, cars will change direction according to the lane direction indicators, cars will not change lanes arbitrarily or illegally, and the like. The movement-history-based trajectory prediction is based on the movement of an object over a period of time (also referred to as "time horizon") to predict future trajectories. How these two trajectory predictions will work in a road environment and what are the advantages and disadvantages for them will be explained with respect to Fig. 1.

Fig. 1 illustrates an exemplary road environment. Shown in Fig. 1 is an exemplary three-way intersection comprising a main road in a vertical direction and a branch in a horizontal direction. The main road has 2 lanes, one being a straight-only lane and the other being a right-turn-only lane for cars to turn right into the branch. Also shown in Fig. 1 is a car 102 traveling on the right-turn lane and is about to reach the intersection. At this moment, a roadmodel-based trajectory prediction is able to recognize that the car 102 is traveling on the right-turn lane due to the knowledge of the road model of this intersection. Meanwhile, according to the assumption of this model, i.e., the car 102 will follow the traffic rules, the roadmodel-based trajectory prediction thus gives a prediction that the car 102 will travel along the trajectory shown as the dashed line 104, i.e., turning right at the intersection and driving into the branch. On the other hand, the movement-history-based trajectory prediction is unaware of the road model of the intersection. It gives predictions only based on the movement history of an object over a period of time. The previous two observation positions 102' and 102"of the car 102 are schematically illustrated in Fig. 1. It will be appreciated that only two previous positions are shown for simplicity, and in practice, more historical locations (e.g., 5 or 10 locations) may be necessary to predict the trajectory. Since the previous positions 102' and 102" of the car and the current position 102 are almost on a straight line, the movement-history-based trajectory prediction thus predicts that the car 102 will travel along the trajectory shown by the dashed line 106, i.e., continually travelling straightforward.

It can be understood that, in the above example, for a vehicle traveling in compliance with traffic rules, the roadmodel-based trajectory prediction, if applicable, can generally predict the future trajectory of the vehicle more accurately. However, as mentioned before, such roadmodel-based trajectory prediction can only be applied in areas with road models, and it must be assumed that objects obey traffic rules, and such prediction is only for cars. In contrast, the movement-history-based trajectory prediction is much more flexible. It works without various assumptions and it is not limited in cars. Its disadvantage is that, since its prediction is based only on historical trajectories, such prediction is actually more similar to summarizing a past trajectory (such as finding a common smooth curve for location points) and extending this trajectory to the future. Therefore, for a motion trajectory with a sharp change (such as a right-angle turn), the trajectory prediction may deviate greatly from the actual trajectory, and the prediction may be less accurate as the predicted future time is further away from the current time.

It can be understood that the roadmodel-based trajectory prediction and the movement-history-based trajectory prediction are both examples for methods or models for trajectory prediction, any other existing models or future developed models for trajectory prediction will also be applicable with the present invention. To make full advantages of the strengths of each model, a hybrid/-mixture predictor may be established.

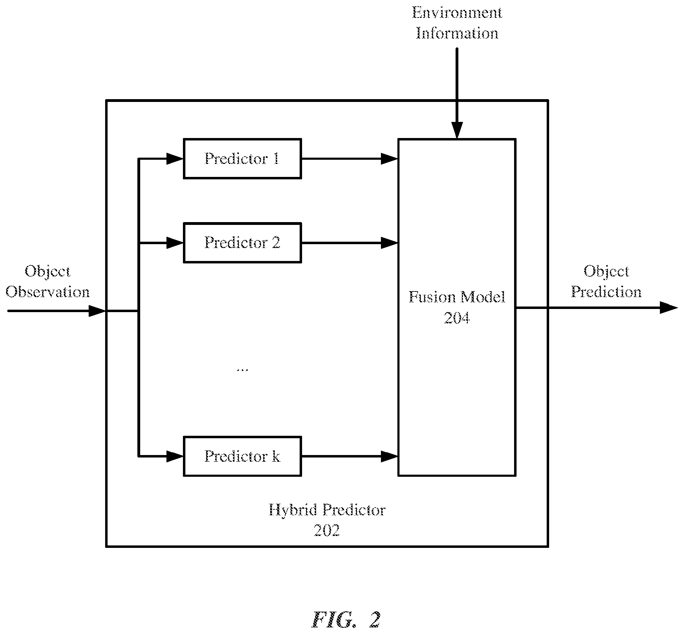

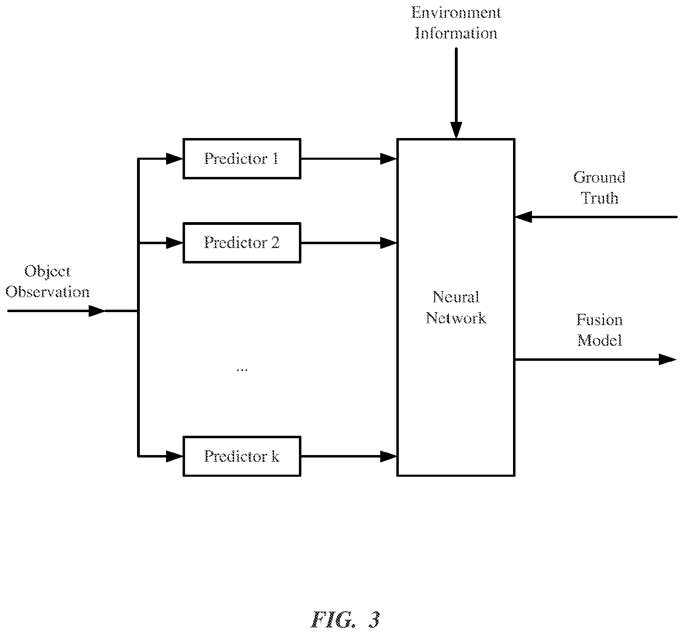

Fig. 2 shows a schematic block diagram of a hybrid predictor 202 in accordance with one embodiment of the present invention. The hybrid predictor 202 may include a plurality of existing predictors (Predictor 1, Predictor 2, ..., Predictor k). The same object observation data, such as sensor data obtained from one or more sensors installed on a vehicle, can be fed into each of the predictors. The predictors may then each give their respective predictions, $P_1, P_2, ..., P_k$, and feed them into a fusion model 204. Meanwhile, environment information may also be obtained and provided to the hybrid predictor 202. The fusion model 204 may be a trained model. The specific ways of how to train the fusion model will be described below with respect to Fig. 3. The fusion model 204 may assign weights, $w_1, w_2, ..., w_k$, to the predictions from each predictor based on the obtained predictions and the environment information and output a fused prediction $P_h$ as the result of object prediction. In one embodiment, the fused prediction $P_h$ may be simply **calculated** as:

$$P_h = \sum_1^k w_k \cdot P_k .$$

Fig. 3 shows a schematic diagram of how to train a fusion model for trajectory prediction in accordance with one embodiment of the present invention. As mentioned before, each predictor may have its own strength in a certain aspect or for a certain scenario. Thus, for a hybrid predictor, how to assign appropriate weights to each predictor under different environments is a challenge and will greatly affect its performance and reliability. In prior art, the weight assignments are usually performed with simple heuristics, which is ineffective and non-reliable. Instead of the simple heuristics, the present invention trains the fusion model with neural network techniques.

As shown in Fig. 3, object observation may similarly be fed into each predictor and respective predictions $P_1, P_2, ..., P_k$ for a same future time instance $t_0$ may be given. Meanwhile, the environment information E, corresponding to that time instance $t_0$ may also be obtained. Then, with time elapses to the time instance $t_0$, the sensor data at this moment can be obtained as ground truth G for the above predictions. Thus, the predictions $P_1, P_2, ..., P_k$, the environment information E, as well as the ground truth G may be labeled together as a set of training data. A huge amount of such training data sets may be fed into a neural network. The neural network may be designed by taking the predictions, the environment information and the ground truth as input, and the weights for each predictor $w_1, w_2, .... w_k$, as the coefficient sets to be trained, and the results may be output as a trained fusion model. With the trained model, for any pair of a set of predictions from the plurality predictors and the associated environment information, the trained model will give out a recommended set of weights to be assigned to each predictor. With the set of weights, the hybrid predictor, such as the hybrid predictor 204 shown in Fig. 2, may provide a fused output prediction.

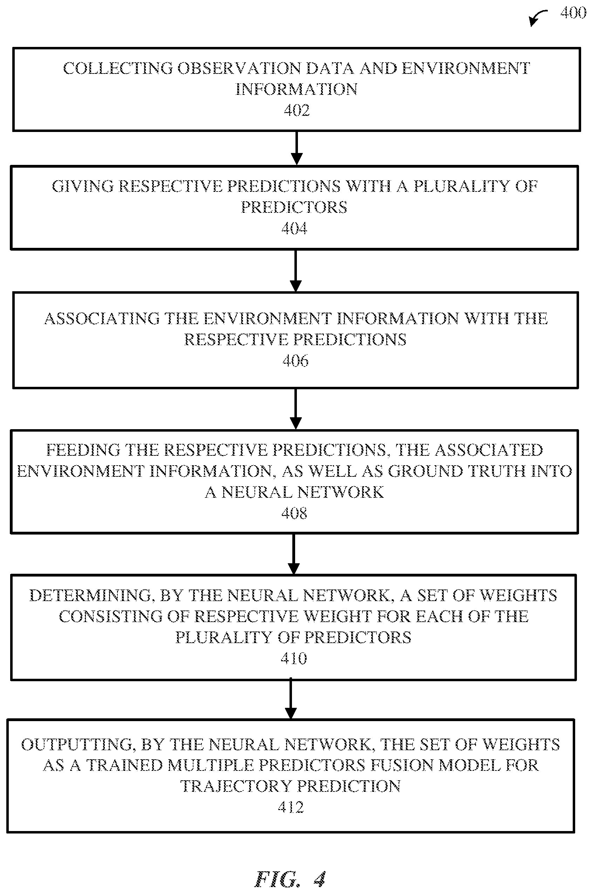

Fig. 4 is a flow diagram of a method 400 for training a multiple predictor fusion model for trajectory prediction in accordance with one embodiment of the present invention. The method 400 begins at block 402, where observation data and environment information may be collected. observation data for an object and environment information related to the object are collected from various sensors. The object mentioned herein may include, but no be limited to, cars, pedestrians, bicycles, scooters, or any other moving objects. The sensors may include, but not be limited to, radars, cameras, Lidars, GPS, etc. The environment information may include, but not be limited to, Localization Information, such as whether the object is in a crowded downtown area or in a suburb area; Road Type Information, such as whether the object is at or near a crossroad or in the middle of a closed highway: Crowdedness Degree, such as whether the object is moving fast or crawling slowly in line; Time Information, such as whether it is on a working day or a weekend day or whether it is rush-hour time; Weather Information, such as whether it is clear whether or raining/snowing; or any other information that may be taken into consideration when determining which prediction model is better under the current environment.

Then, at block 404, a plurality of predictors may give respective predictions. In particular, as aforementioned, the hybrid predictor may consist of a plurality of predictors or trajectory prediction models. Thus, based on the obtained observation data, each predictor may give its prediction of the same object for a same upcoming time instant.

At block 406, the environment information may be associated with the respective predictions for the given time instant. Then, at block 408, the respective predictions and the associated environment information may be fed into a neural network, as well as the ground truth. As described with regard to Fig. 3, the respective predictions, the associated environment information and the ground truth will be used as a training data set to train the neural network.

Then, at block 410, the neural network may determine a set of weights consisting of respective weight for each of the plurality of predictors based on the training data. As mentioned before, the purpose of training the neural network is to find an appropriate set(s) of coefficients (weights, in this case) for particular inputs (respective predictions from a plurality of predictors and environment information, in this case). With a great amount of training data, the set(s) of weights may be determined. Thereafter, at block 412, the neural network may output the determined set(s) of weights as a trained multiple predictors fusion model for trajectory prediction.

Theoretically, neural networks can eventually be trained, if sufficient training data can be provided. However, in the reality, the cost for training a neural network has to be considered. A well-established neural network may substantially reduce the work load, the amount of training data, the amount of calculation or other resources required for training the neural network and improve the speed of learning and the reliability of training results. For example, the above mentioned neural network can be trained without the environment information, but with the environment information being taken into consideration as a parameter, the training progress of the neural network will be much more effective. The parameters that affect the progress of training a neural network are called "hyper-parameters".

The commonly used hyper-parameters in neural networks may include the following: learning rate $\eta$; regularization parameter $\lambda$; the number of layers of the neural network $L$; the number of neurons in each hidden layer j: learning round number *Epoch*; the size of small batch data *minibatch*; the encoding manner of the output neurons; the cost function selection: the weight initialization method; the neuron activation function type: the scale of training data; or the like.

Usually, in prior art, the hyper-parameters are manually tuned through a trial-and-error approach to optimize the overall performance of a neural network. To reduce the burdens of manual tuning by experienced engineers, the present invention proposes a more systematical method for tuning hyper-parameters.

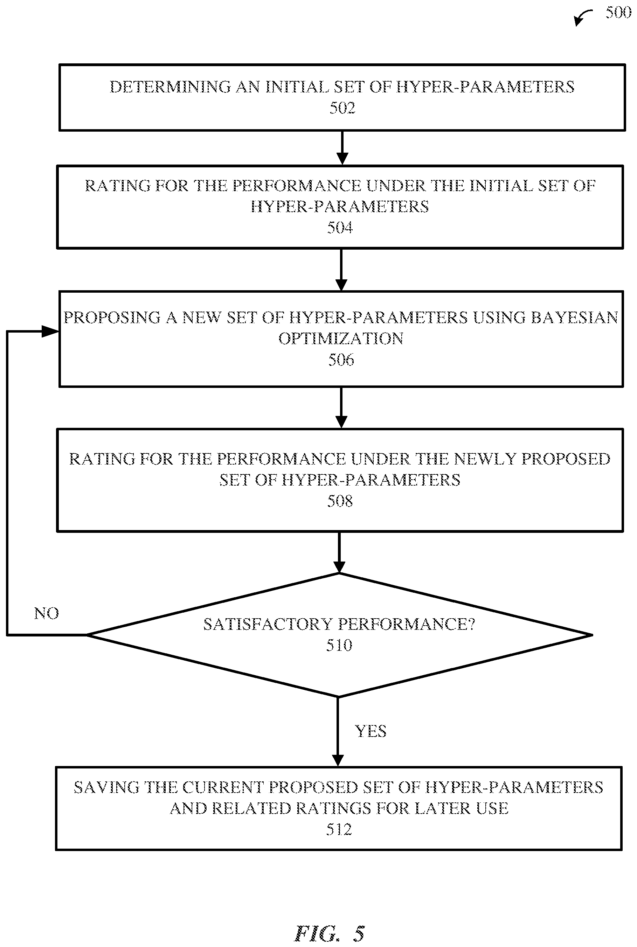

Fig. 5 is a flow diagram of a method 500 for tuning hyper-parameters of a neural network in accordance with one embodiment of the present invention. The method 500 begins at block 502, where an initial set of hyper-parameters may be determined. In one embodiment, the initial set of hyper-parameters may be determined by human experts, who may further demonstrate their prediction performance.

At block 504, the performance under the initial set of hyper-parameters may be rated. For example, after a first run under the initial set of hyper-parameters, the human experts may evaluate the performance and give a subjective rating to their effects. Then, at block 506, a new set of hyper-parameters may be proposed using Bayesian optimization. Bayesian optimization is an algorithm that may be used in machine learning for finding an optimal combination of parameters. With the Bayesian optimization algorithm, the algorithm may proposed a new set of hyper-parameters.

Similar to block 504, the performance under the proposed set of hyper-parameters may be rated, at block 508. The human experts may similarly evaluate the performance and give a rating to the effects of the new set of hyper-parameters proposed by the algorithm. Then, at block 510, it is determined whether a satisfactory performance is attained.

In response that a satisfactory performance is not attained, ("NO" at block 510), the method returns to block 506, where another set of hyper-parameters may be proposed by the Bayesian optimization algorithm. The blocks 506 and 508 will be repeated, until a satisfactory performance is attained, ("YES" at block 510). Then, the method continues to block 512, where the current proposed set of hyper-parameters and related ratings may be saved for later use. Also, all of the other proposed sets of hyper-parameter and the ratings collected throughout the entire progress will be saved for later use.

The above described framework can use human expert feedback efficiently and propose promising hyper-parameter set in a systematical way. Besides, it's effective for hard-to-define evaluation metric optimization, which is a typical case for trajectory prediction.

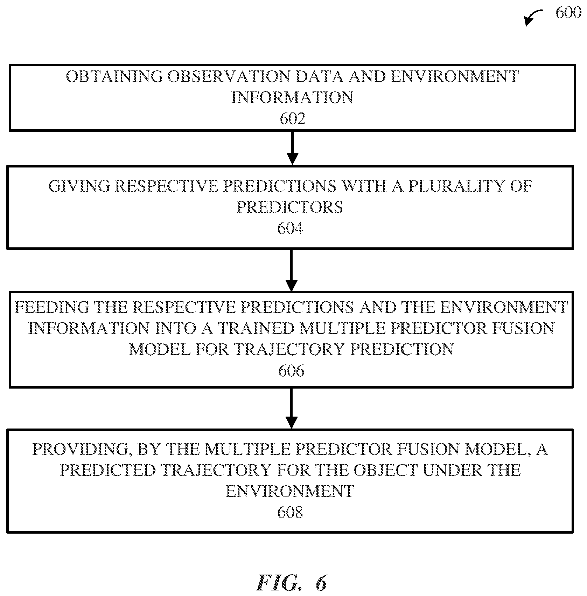

With the trained fusion model, an improved trajectory prediction can be achieved. Fig. 6 is a flow diagram of a method 600 for trajectory prediction in accordance with one embodiment of the present invention. The method 600 begins at block 602, where observation data and environment information may be collected. Then, at block 604, a plurality of predictors may give respective predictions. In particular, as aforementioned, the hybrid predictor may consist of a plurality of predictors or trajectory prediction models. Thus, based on the obtained observation data, each predictor may give its prediction of the same object for a same upcoming time instant.

At block 606, the respective predictions and the environment information may be fed into a multiple predictor fusion model for trajectory prediction which has been trained according to the method of the present invention described above. Then, at block 608, the multiple predictor fusion model may provide a predicted trajectory for the object under the current environment.

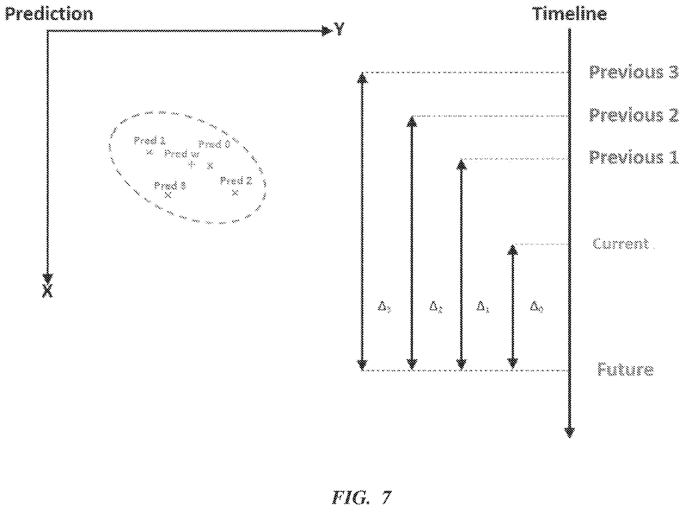

Fig. 7 shows a schematic diagram of an exemplary confidence weighed estimation algorithm in accordance with one embodiment of the present invention. The left illustration in Fig. 7 is an exemplary distribution of predictions in an X-Y coordinate system, while the right illustration in Fig. 7 is a timeline showing the timestamps corresponding to the predictions in the left illustration.

In this algorithm, a set of previous prediction instances, for example prediction instances from last 5 seconds, is cached for each current timestamp. When it is desired to make prediction for a specific future timestamp, first it generates a current prediction instance and get a current prediction output, which is the "Pred 0" notation in the left prediction illustration in Fig. 7. Besides, it also uses cached previous prediction instances and get previous prediction outputs, which are the "Pred 1", "Pred 2" and "Pred 3" notations in the left prediction illustration.

Prediction outputs from both previous and current prediction instances together form a prediction output population for the future timestamp. However, since different prediction instances have different information when they were generated, their outputs would be weighed by the time length ($\Delta_0, \Delta_1, \Delta_2, \Delta_3,$) they look into future. A confidence score may be calculated using each instance's look-into-future time length for each output. Generally, the weight assigned to each of the current prediction and the plurality of previous predictions decreases with the age of prediction. Then, a confidence weighted prediction ("Pred w") will be used in replace of the single prediction ("Pred 0") made at the current time instance. Thus, as an optional feature, all of the individual predictors mentioned in the present invention can employ this algorithm to provide confidence weighted predictions, and these confidence weighted predictions may in turn be fed into the neural network for training as well as the trained fusion model.

In addition to obtaining more reliable and confident predictions, another advantage of this algorithm is that, after attaining both outputs and their corresponding weights, interested statistics such as mean and covariance matrix can be estimated using statistical estimation methods. Such statistics may further be used in future data analysis and processing.

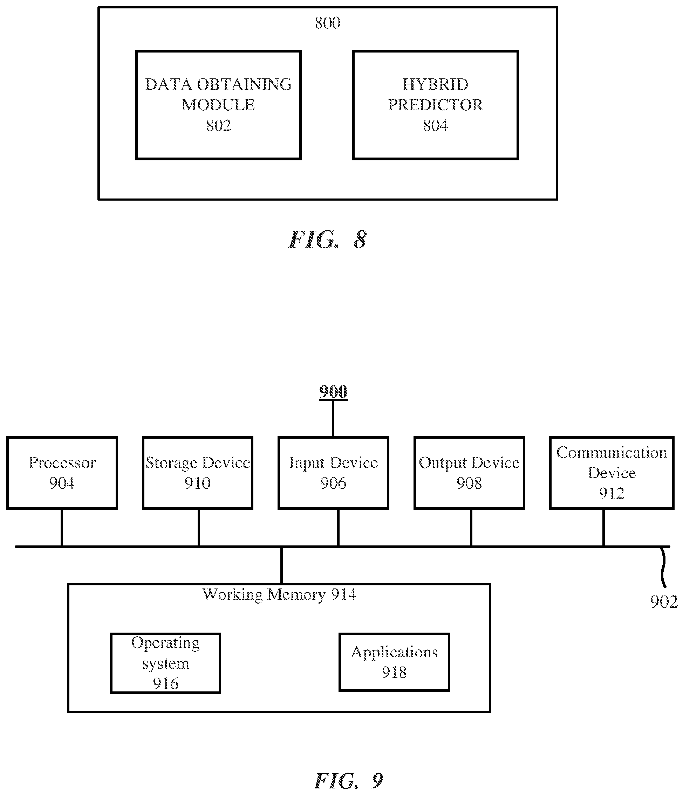

Fig. 8 shows a schematic block diagram of a trajectory prediction apparatus 800 in accordance with one embodiment of the present invention. As shown in Fig. 8, the trajectory prediction apparatus 800 may include a data obtaining module 802 and a hybrid predictor 804. The sensor data obtaining module 802 is configured to observation data for an object and environment information related to the object. The hybrid predictor 804 may be the hybrid predictor 202 with regard to Fig. 2. The hybrid predictor 804 may consist of a plurality of predictors each with a weight assigned by the hybrid predictor, and the hybrid predictor 804 may be configured to: receive the observation data and the environment information from the data obtaining module; give respective predictions for the object based on historical observation data with the plurality of predictors; feed the respective predictions and the environment information into a multiple predictor fusion model for trajectory prediction that has been trained according to the present invention.

Fig. 9 illustrates a computing system 900 in accordance with an exemplary embodiment of the present disclosure.

With reference to Fig. 9, a computing device 900, which is an example of the hardware device that may be applied to the aspects of the present disclosure, will now be described. The computing device 900 may be any machine configured to perform processing and/or calculations, may be but is not limited to a work station, a server, a desktop computer, a laptop computer, a tablet computer, a personal data assistant, a smart phone, an on-vehicle computer or any combination thereof. The aforementioned system may be wholly or at least partially implemented by the computing device 900 or a similar device or system.

The computing device 900 may comprise elements that are connected with or in communication with a bus 902, possibly via one or more interfaces. For example, the computing device 900 may comprise the bus 902, and one or more processors 904, one or more input devices 906 and one or more output devices 908. The one or more processors 904 may be any kinds of processors, and may comprise but are not limited to one or more general-purpose processors and/or one or more special-purpose processors (such as special processing chips). The input devices 906 may be any kinds of devices that can input information to the computing device, and may comprise but are not limited to a mouse, a keyboard, a touch screen, a microphone and/or a remote control. The output devices 908 may be any kinds of devices that can present information, and may comprise but are not limited to display, a speaker, a video/audio output terminal, a vibrator and/or a printer. The computing device 900 may also comprise or be connected with non-transitory storage devices 910 which may be any storage devices that are non-transitory and can implement data stores, and may comprise but are not limited to a disk drive, an optical storage device, a solid-state storage, a floppy disk, a flexible disk, hard disk, a magnetic tape or any other magnetic medium, a compact disc or any other optical medium, a ROM (Read Only Memory), a RAM (Random Access Memory), a cache memory and/or any other memory chip or cartridge, and/or any other medium from which a computer may read data, instructions and/or code. The non-transitory storage devices 910 may be detachable from an interface. The non-transitory storage devices 910 may have data/instructions/code for implementing the methods and steps which are described above. The computing device 900 may also comprise a communication device 912. The communication device 912 may be any kinds of device or system that can enable communication with external apparatuses and/or with a network, and may comprise but are not limited to a modem, a network card, an infrared communication device, a wireless communication device and/or a chipset such as a Bluetooth™ device, 802.11 device, Wi-Fi device, Wi-Max device, cellular communication facilities and/or the like.

When the computing device 900 is used as an on-vehicle device, it may also be connected to external device, for example, a GPS receiver, sensors for sensing different environmental data such as an acceleration sensor, a wheel speed sensor, a gyroscope and so on. In this way, the computing device 900 may, for example, receive location data and sensor data indicating the travelling situation of the vehicle. When the computing device 900 is used as an on-vehicle device, it may also be connected to other facilities (such as an engine system, a wiper, an anti-lock Braking System or the like) for controlling the traveling and operation of the vehicle.

In addition, the non-transitory storage device 910 may store observation data for an object and environment information related to the object so that the processor 904 may perform training a multiple predictor fusion model for trajectory prediction as described in the present invention. In addition, the output device 906 may comprise a display for displaying the map, the location mark of the vehicle and also images indicating the travelling situation of the vehicle. The output device 906 may also comprise a speaker or interface with an ear phone for audio guidance.

The bus 902 may include but is not limited to Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Particularly, for an on-vehicle device, the bus 902 may also include a Controller Area Network (CAN) bus or other architectures designed for application on an automobile.

The computing device 900 may also comprise a working memory 914, which may be any kind of working memory that may store instructions and/or data useful for the working of the processor 904, and may comprise but is not limited to a random access memory and/or a read-only memory device.

Software elements may be located in the working memory 914, including but are not limited to an operating system 916, one or more application programs 918, drivers and/or other data and codes. Instructions for performing the methods and steps described in the above may be comprised in the one or more application programs 918, and the units of the aforementioned apparatus 800 may be implemented by the processor 904 reading and executing the instructions of the one or more application programs 918. The executable codes or source codes of the instructions of the software elements may be stored in a non-transitory computer-readable storage medium, such as the storage device (s) 910 described above, and may be read into the working memory 914 possibly with compilation and/or installation. The executable codes or source codes of the instructions of the software elements may also be downloaded from a remote location.

Those skilled in the art may clearly know from the above embodiments that the present disclosure may be implemented by software with necessary hardware, or by hardware, firmware and the like. Based on such understanding, the embodiments of the present disclosure may be embodied in part in a software form. The computer software may be stored in a readable storage medium such as a floppy disk, a hard disk, an optical disk or a flash memory of the computer. The computer software comprises a series of instructions to make the computer (e.g., a personal computer, a service station or a network terminal) execute the method or a part thereof according to respective embodiment of the present disclosure.

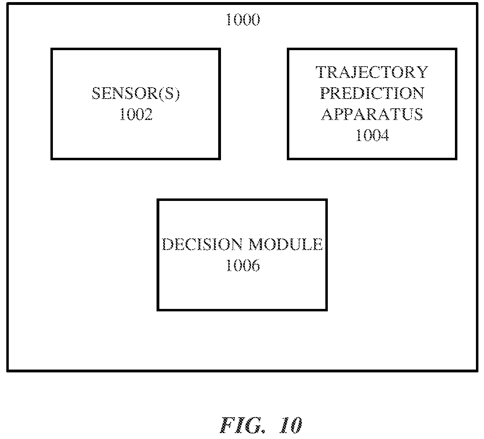

Fig. 10 illustrates an exemplary vehicle 1000 according to an embodiment of the present invention. The vehicle 1000 may comprise at least one sensor 1002 configured to capture sensing data for objects surrounding the vehicle, a trajectory prediction apparatus 1004 for providing trajectory predictions, such as the trajectory prediction apparatus 800 in Fig. 8, and a decision module 1006 configured to make vehicle control decisions based on the trajectories for objects surrounding the vehicle predicted by the trajectory prediction apparatus 1004.

Reference has been made throughout this specification to "one example" or "an example", meaning that a particular described feature, structure, or characteristic is included in at least one example. Thus, usage of such phrases may refer to more than just one example. Furthermore, the described features, structures, or characteristics may be combined in any suitable manner in one or more examples.

While sample examples and applications have been illustrated and described, it is to be understood that the examples are not limited to the precise configuration and resources described above. Various modifications, changes, and variations apparent to those skilled in the art may be made in the arrangement, operation, and details of the methods and systems disclosed herein without departing from the scope of the claims.

**Claims**

1. A computer-implemented method (400) for training a multiple predictor fusion model for trajectory prediction of a real object, based on observation data of the object and environmental information related to the object, wherein the multiple predictor fusion model consists of a set of weights, where each weight is foreseen for a predictor, comprising:

    collecting, from various sensors, observation data of an object and environment information related to the object (402);
    for a given time instant, giving respective predictions for the object based on historical observation data with a plurality of predictors (1, 2, ..., k) (404);
    associating the environment information with the respective predictions for the given time instant (406);
    feeding into a neural network the respective predictions and the associated environment information for the given time instant as input, as well as the observation data for the given time instant as ground truth (408);

determining, by the neural network, a set of weights consisting of respective weight for each of the plurality of predictors (1, 2, ..., k) by taking the respective predictions and the associated environment information for the given time instant as input and taking the observation data for the given time instant as ground truth (410); and

outputting, by the neural network, the set of weights as a trained multiple predictor fusion model (204) for trajectory prediction (412) of a real object, based on observation data of the object and environmental information related to the object.

2. The method (400) according to claim 1, wherein determining the set of weights further comprises tuning hyper-parameters of the neural network based on Bayesian optimization.

3. The method (400) according to claim 2, tuning hyper-parameters of the neural network based on Bayesian optimization further comprises the followings steps:

   (a) determining an initial set of hyper-parameters;
   (b) rating for the performance under the initial set of hyper-parameters;
   (c) proposing a new set of hyper-parameters using Bayesian optimization;
   (d) rating for the performance under the newly proposed set of hyper-parameters;
   (e) repeating steps (c) and (d) until a satisfactory performance is attained; and
   (f) saving the current proposed set of hyper-parameters and related ratings for later use.

4. The method (400) according to any one of claims 1-3, the environment information comprises at least one of the following:

   localization information;
   crowdedness degree;
   road type;
   time information; and
   whether information.

5. A computer-implemented method (600) for trajectory prediction, comprising

   obtaining from various sensors observation data of a real object and environment information related to the object (602);
   giving respective predictions for the object based on historical observation data with a plurality of predictors (1, 2, ..., k) (604);

feeding the respective predictions and the environment information into a multiple predictor fusion model for trajectory prediction that has been trained according to the method of any one of claims 1-4 (606);

providing, by the multiple predictor fusion model, a predicted trajectory for the object under the environment indicated by the environment information (608).

6. The method (600) according to claim 5, wherein at least one of the respective predictions for the given instant is a weighted prediction of a current prediction given based on the observation data obtained until the current instant and a plurality of previous predictions given at a plurality of previous time instants respectively based on the observation data until each of the plurality of previous time instants.

7. The method (600) according to claim 6, wherein the weight assigned to each of the current prediction and the plurality of previous predictions decreases with the age of prediction.

8. A computing system (900), comprising:

   a storage device (910) configured to store from various sensors observation data of a real object and environment information related to the object; and
   a processor (904) coupled to the storage device (910), wherein the processor (904) is configured to perform a method for training a multiple predictor fusion model (204) for trajectory prediction, wherein the multiple predictor fusion model consists of a set of weights, where each weight is foreseen for a predictor, the method comprising:

   retrieving the observation data and the environment information from the storage device;
   for a given time instant, giving respective predictions for the object based on historical observation data with a plurality of predictors (1, 2, ..., k);
   associating the environment information with the respective predictions for the given time instant;
   feeding into a neural network the respective predictions and the associated environment information for the given time instant as input, as well as the observation data for the given time instant as ground truth;
   determining, by the neural network, a set of weights consisting of respective weight for each of the plurality of predictors (1, 2, ..., k) by taking the respective predictions and the associated environment information for the given time instant as input and taking the observation data for the given time instant as ground truth; and

outputting, by the neural network, the set of weights as a trained multiple predictor fusion model (204) for trajectory prediction of a real object, based on observation data of the object and environmental information related to the object.

9. The computing system (900) according to claim 8, wherein determining the set of weights further comprises tuning hyper-parameters of the neural network based on Bayesian optimization.

10. The computing system (900) according to claim 9, tuning hyper-parameters of the neural network based on Bayesian optimization further comprises the followings steps:

(a) determining an initial set of hyper-parameters;
(b) rating for the performance under the initial set of hyper-parameters;
(c) proposing a new set of hyper-parameters using Bayesian optimization;
(d) rating for the performance under the newly proposed set of hyper-parameters;
(e) repeating steps (c) and (d) until a satisfactory performance is attained; and
(f) saving the current proposed set of hyper-parameters and related ratings for later use.

11. The computing system (900) according to any one of claims 8-10, the environment information comprises at least one of the following:

geographic location;
crowded degree;
road type; and
time of a day.

12. A trajectory prediction apparatus (800), comprising

a data obtaining module (802) configured to obtain from various sensors observation data for a real object and environment information related to the object; and
a hybrid predictor (804) consisting of a plurality of predictors (1, 2, ..., k) each with a weight assigned by the hybrid predictor, and the hybrid predictor is configured to:

receive the observation data and the environment information from the data obtaining module;
give respective predictions for the object based on historical observation data with the plurality of predictors (1, 2, ..., k);
feed the respective predictions and the environment information into a multiple predictor fusion model for trajectory prediction that has been trained according to the method of any one of claims 1-4; and
provide, by the multiple predictor fusion model, a predicted trajectory for the object under the environment indicated by the environment information as the output of the plurality of predictors (1, 2, ..., k).

13. The trajectory prediction apparatus (800) according to claim 12, wherein at least one of the respective predictions for the given instant is a weighted prediction of a current prediction given based on the observation data obtained until the current instant and a plurality of previous predictions given at a plurality of previous time instants respectively based on the observation data until each of the plurality of previous time instants.

14. The trajectory prediction apparatus (800) according to claim 13, wherein the weight assigned to each of the current prediction and the plurality of previous predictions decreases with the age of prediction.

15. A vehicle (1000), comprising:

at least one sensor (1002) configured to collect observation data for objects and environment information related to the objects; and
a trajectory prediction apparatus (1004) according to any one of claims 12-14; and
a decision module (1006) configured to make vehicle control decisions based on the trajectories of objects surrounding the vehicle predicted by the trajectory prediction apparatus (1004).

**Patentansprüche**

1. Ein computerimplementiertes Verfahren (400) zum Trainieren eines Mehrfachprädiktor-Fusionsmodells zur Trajektorienvorhersage eines realen Objekts, basierend auf Beobachtungsdaten des Objekts und umgebungsbezogenen Informationen in Bezug auf das Objekt, wobei das Mehrfachprädiktor-Fusionsmodell aus einem Satz von Gewichten besteht, wobei jedes Gewicht für einen Prädiktor vorgesehen ist, umfassend:

Sammeln von Beobachtungsdaten eines Objekts und umgebungsbezogenen Informationen in Bezug auf das Objekt von verschiedenen Sensoren (402);
für einen gegebenen Zeitpunkt, Abgeben jeweiliger Vorhersagen für das Objekt basierend auf historischen Beobachtungsdaten mit einer Vielzahl von Prädiktoren (1, **2**, ..., **k) (404);**
Assoziieren der umgebungsbezogenen Informationen mit den jeweiligen Vorhersagen für den gegebenen Zeitpunkt (406);
Eingeben der jeweiligen Vorhersagen und der assoziierten umgebungsbezogenen Informationen für den gegebenen Zeitpunkt als Eingabe in ein neuronales Netzwerk, sowie der Beobachtungsdaten für den gegebenen Zeitpunkt als Grundwahrheit (408); Bestimmen, durch das neuronale Netzwerk, eines Satzes von Gewichten, bestehend aus jeweiligen Gewichten für jeden der Vielzahl von Prädiktoren (1, 2, ..., k), indem die jeweiligen Vorhersagen und die assoziierten umgebungsbezogenen Informationen für den gegebenen Zeitpunkt als Eingabe genommen werden und die Beobachtungsdaten für den gegebenen Zeitpunkt als Grundwahrheit genommen werden (410); und
Ausgeben, durch das neuronale Netzwerk, des Satzes von Gewichten als ein trainiertes Mehrfachprädiktor-Fusionsmodell (204) zur Trajektorienvorhersage (412) eines realen Objekts, basierend auf Beobachtungsdaten des Objekts und umgebungsbezogenen Informationen in Bezug auf das Objekt.

2. Das Verfahren (400) nach Anspruch 1, wobei das Bestimmen des Satzes von Gewichten ferner das Abstimmen von Hyperparametern des neuronalen Netzwerks basierend auf Bayesscher Optimierung umfasst.

3. Das Verfahren (400) nach Anspruch 2, wobei das Abstimmen von Hyperparametern des neuronalen Netzwerks basierend auf Bayesscher Optimierung ferner die folgenden Schritte umfasst:

(a) Bestimmen eines anfänglichen Satzes von Hyperparametern;
(b) Bewerten der Leistung unter dem anfänglichen Satz von Hyperparametern;
(c) Vorschlagen eines neuen Satzes von Hyperparametern unter Verwendung Bayesscher Optimierung;
(d) Bewerten der Leistung unter dem neu vorgeschlagenen Satz von Hyperparametern;
(e) Wiederholen der Schritte (c) und (d), bis eine zufriedenstellende Leistung erreicht ist; und
(f) Speichern des aktuell vorgeschlagenen Satzes von Hyperparametern und zugehörigen Bewertungen zur späteren Verwendung.

4. Das Verfahren (400) nach einem der Ansprüche 1-3, wobei die umgebungsbezogenen Informationen mindestens eines der folgenden umfassen:

Lokalisierungsinformationen;
Grad der Überfüllung;
Straßentyp;
Zeitinformationen; und
Wetterinformationen.

5. Ein computerimplementiertes Verfahren (600) zur Trajektorienvorhersage, umfassend:

Erhalten von Beobachtungsdaten eines realen Objekts und umgebungsbezogenen Informationen in Bezug auf das Objekt von verschiedenen Sensoren (602);
Abgeben jeweiliger Vorhersagen für das Objekt basierend auf historischen Beobachtungsdaten mit einer Vielzahl von Prädiktoren (1, 2, ..., k) (604);
Eingeben der jeweiligen Vorhersagen und der umgebungsbezogenen Informationen in ein Mehrfachprädiktor-Fusionsmodell zur Trajektorienvorhersage, das gemäß dem Verfahren nach einem der Ansprüche 1-4 trainiert wurde (606);
Bereitstellen, durch das Mehrfachprädiktor-Fusionsmodell, einer vorhergesagten Trajektorie für das Objekt unter der durch die umgebungsbezogenen Informationen angegebenen Umgebung (608).

6. Das Verfahren (600) nach Anspruch 5, wobei mindestens eine der jeweiligen Vorhersagen für den gegebenen Zeitpunkt eine gewichtete Vorhersage einer aktuellen Vorhersage ist, die basierend auf den bis zum aktuellen Zeitpunkt erhaltenen Beobachtungsdaten und einer Vielzahl von vorherigen Vorhersagen gegeben wird, die zu einer Vielzahl von vorherigen Zeitpunkten jeweils basierend auf den Beobachtungsdaten bis zu jedem der Vielzahl von vorherigen Zeitpunkten gegeben wurden.

7. Das Verfahren (600) nach Anspruch 6, wobei das jeder der aktuellen Vorhersage und der Vielzahl von vorherigen Vorhersagen zugewiesene Gewicht mit dem Alter der Vorhersage abnimmt.

8. Ein Computersystem (900), umfassend:

eine Speichervorrichtung (910), die konfiguriert ist, um von verschiedenen Sensoren Beobachtungsdaten eines realen Objekts und umgebungsbezogene Informationen in Bezug auf das Objekt zu speichern; und
einen Prozessor (904), der mit der Speichervorrichtung (910) gekoppelt ist, wobei der Prozessor (904) konfiguriert ist, ein Verfahren zum Trainieren eines Mehrfachprädiktor-Fusionsmodells (204) zur Trajektorienvorhersage durchzuführen, wobei das Mehrfachprädiktor-Fusionsmodell aus einem Satz von Gewichten besteht,

wobei jedes Gewicht für einen Prädiktor vorgesehen ist, wobei das Verfahren umfasst:

Abrufen der Beobachtungsdaten und der umgebungsbezogenen Informationen aus der Speichervorrichtung;

für einen gegebenen Zeitpunkt, Abgeben jeweiliger Vorhersagen für das Objekt basierend auf historischen Beobachtungsdaten mit einer Vielzahl von Prädiktoren (1, 2, ..., k);

Assoziieren der umgebungsbezogenen Informationen mit den jeweiligen Vorhersagen für den gegebenen Zeitpunkt;

Eingeben der jeweiligen Vorhersagen und der assoziierten umgebungsbezogenen Informationen für den gegebenen Zeitpunkt als Eingabe in ein neuronales Netzwerk, sowie der Beobachtungsdaten für den gegebenen Zeitpunkt als Grundwahrheit;

Bestimmen, durch das neuronale Netzwerk, eines Satzes von Gewichten, bestehend aus jeweiligen Gewichten für jeden der Vielzahl von Prädiktoren (1, 2, ..., k), indem die jeweiligen Vorhersagen und die assoziierten umgebungsbezogenen Informationen für den gegebenen Zeitpunkt als Eingabe genommen werden und die Beobachtungsdaten für den gegebenen Zeitpunkt als Grundwahrheit genommen werden; und

Ausgeben, durch das neuronale Netzwerk, des Satzes von Gewichten als ein trainiertes Mehrfachprädiktor-Fusionsmodell (204) zur Trajektorienvorhersage eines realen Objekts, basierend auf Beobachtungsdaten des Objekts und umgebungsbezogenen Informationen in Bezug auf das Objekt.

9. Das Computersystem (900) nach Anspruch 8, wobei das Bestimmen des Satzes von Gewichten ferner das Abstimmen von Hyperparametern des neuronalen Netzwerks basierend auf Bayesscher Optimierung umfasst.

10. Das Computersystem (900) nach Anspruch 9, wobei das Abstimmen von Hyperparametern des neuronalen Netzwerks basierend auf Bayesscher Optimierung ferner die folgenden Schritte umfasst:

(a) Bestimmen eines anfänglichen Satzes von Hyperparametern;
(b) Bewerten der Leistung unter dem anfänglichen Satz von Hyperparametern;
(c) Vorschlagen eines neuen Satzes von Hyperparametern unter Verwendung Bayesscher Optimierung;
(d) Bewerten der Leistung unter dem neu vorgeschlagenen Satz von Hyperparametern;
(e) Wiederholen der Schritte (c) und (d), bis eine zufriedenstellende Leistung erreicht ist; und
(f) Speichern des aktuell vorgeschlagenen Satzes von Hyperparametern und zugehörigen Bewertungen zur späteren Verwendung.

11. Das Computersystem (900) nach einem der Ansprüche 8-10, wobei die umgebungsbezogenen Informationen mindestens eines der folgenden umfassen:

geografischer Standort;
Grad der Überfüllung;
Straßentyp; und
Tageszeit.

12. Eine Trajektorienvorhersagevorrichtung (800), umfassend:

ein Datenerfassungsmodul (802), das konfiguriert ist, um von verschiedenen Sensoren Beobachtungsdaten für ein reales Objekt und umgebungsbezogene Informationen in Bezug auf das Objekt zu erhalten; und
einen Hybridprädiktor (804), der aus einer Vielzahl von Prädiktoren (1, 2, ..., k) besteht, wobei jedem vom Hybridprädiktor ein Gewicht zugewiesen ist, und der Hybridprädiktor konfiguriert ist zum:

Empfangen der Beobachtungsdaten und der umgebungsbezogenen Informationen vom Datenerfassungsmodul;
Abgeben jeweiliger Vorhersagen für das Objekt basierend auf historischen Beobachtungsdaten mit der Vielzahl von Prädiktoren (1, 2, ..., k);
Eingeben der jeweiligen Vorhersagen und der umgebungsbezogenen Informationen in ein Mehrfachprädiktor-Fusionsmodell zur Trajektorienvorhersage, das gemäß dem Verfahren nach einem der Ansprüche 1-4 trainiert wurde; und
Bereitstellen, durch das Mehrfachprädiktor-Fusionsmodell, einer vorhergesagten Trajektorie für das Objekt unter der durch die umgebungsbezogenen Informationen angegebenen Umgebung als Ausgabe der Vielzahl von Prädiktoren (1, 2, ..., k).

13. Die Trajektorienvorhersagevorrichtung (800) nach Anspruch 12, wobei mindestens eine der jeweiligen Vorhersagen für den gegebenen Zeitpunkt eine gewichtete Vorhersage einer aktuellen Vorhersage ist, die basierend auf den bis zum aktuellen Zeitpunkt erhaltenen Beobachtungsdaten und einer Vielzahl von vorherigen Vorhersagen gegeben wird, die zu einer Vielzahl von vorherigen Zeitpunkten jeweils basierend auf den Beobachtungsdaten bis zu jedem der Vielzahl von vorherigen Zeitpunkten gegeben wurden.

14. Die Trajektorienvorhersagevorrichtung (800) nach Anspruch 13, wobei das jeder der aktuellen Vorhersage und der Vielzahl von vorherigen Vorhersagen zugewiesene Gewicht mit dem Alter der Vorhersage abnimmt.

15. Ein Fahrzeug (1000), umfassend:

mindestens einen Sensor (1002), der konfiguriert ist, um Beobachtungsdaten für Objekte und umgebungsbezogene Informationen in Bezug auf die Objekte zu sammeln; und
eine Trajektorienvorhersagevorrichtung (1004) nach einem der Ansprüche 12-14; und
ein Entscheidungsmodul (1006), das konfiguriert ist, um Fahrzeugsteuerungsentscheidungen basierend auf den von der Trajektorienvorhersagevorrichtung (1004) vorhergesagten Trajektorien von das Fahrzeug umgebenden Objekten zu treffen.

## Revendications

1. Une méthode implémentée par ordinateur (400) pour entraîner un modèle de fusion de prédicteurs multiples pour la prédiction de trajectoire d'un objet réel, basée sur des données d'observation de l'objet et des informations environnementales liées à l'objet, où le modèle de fusion de prédicteurs multiples consiste en un ensemble de poids, chaque poids étant prévu pour un prédicteur, comprenant :

la collecte, à partir de divers capteurs, de données d'observation d'un objet et d'informations environnementales liées à l'objet (402) ;
pour un instant donné, la fourniture de prédictions respectives pour l'objet basées sur des données d'observation historiques avec une pluralité de prédicteurs (1, 2, ..., k) **(404)** ;
l'association des informations environnementales aux prédictions respectives pour l'instant donné (406) ;
l'alimentation d'un réseau neuronal avec les prédictions respectives et les informations environnementales associées pour l'instant donné comme entrée, ainsi que les données d'observation pour l'instant donné comme vérité terrain (408) ;
la détermination, par le réseau neuronal, d'un ensemble de poids consistant en un poids respectif pour chacun de la pluralité de prédicteurs (1, 2, ..., k) en prenant les prédictions respectives et les informations environnementales associées pour l'instant donné comme entrée et en prenant les données d'observation pour l'instant donné comme vérité terrain (410) ; et
la sortie, par le réseau neuronal, de l'ensemble de poids comme un modèle de fusion de prédicteurs multiples entraîné (204) pour la prédiction de trajectoire (412) d'un objet réel, basé sur des données d'observation de l'objet et des informations environnementales liées à l'objet.

2. La méthode (400) selon la revendication 1, dans laquelle la détermination de l'ensemble de poids comprend en outre l'ajustement des hyperparamètres du réseau neuronal basé sur l'optimisation bayésienne.

3. La méthode (400) selon la revendication 2, l'ajustement des hyperparamètres du réseau neuronal basé sur l'optimisation bayésienne comprend en outre les étapes suivantes :

(a) déterminer un ensemble initial d'hyperparamètres :
(b) évaluer la performance sous l'ensemble initial d'hyperparamètres ;
(c) proposer un nouvel ensemble d'hyperparamètres en utilisant l'optimisation bayésienne ;
(d) évaluer la performance sous le nouvel ensemble d'hyperparamètres proposé ;
(e) répéter les étapes (c) et (d) jusqu'à ce qu'une performance satisfaisante soit atteinte ; et
(f) sauvegarder l'ensemble actuel d'hyperparamètres proposé et les évaluations associées pour une utilisation ultérieure.

4. La méthode (400) selon l'une quelconque des revendications 1-3, les informations environnementales comprennent au moins l'un des éléments suivants :

informations de localisation ;
degré d'encombrement ;
type de route ;
informations temporelles ; et
informations météorologiques.

5. Une méthode implémentée par ordinateur (600) pour la prédiction de trajectoire, comprenant :

l'obtention à partir de divers capteurs de données d'observation d'un objet réel et d'informations environnementales liées à l'objet (602) ;
la fourniture de prédictions respectives pour l'objet basées sur des données d'observation historiques avec une pluralité de prédicteurs (1, 2, ..., k) (604) ;

l'alimentation des prédictions respectives et des informations environnementales dans un modèle de fusion de prédicteurs multiples pour la prédiction de trajectoire qui a été entraîné selon la méthode de l'une quelconque des revendications 1-4 (606) ;

la fourniture, par le modèle de fusion de prédicteurs multiples, d'une trajectoire prédite pour l'objet dans l'environnement indiqué par les informations environnementales (608).

6. La méthode (600) selon la revendication 5, dans laquelle au moins l'une des prédictions respectives pour l'instant donné est une prédiction pondérée d'une prédiction actuelle donnée basée sur les données d'observation obtenues jusqu'à l'instant actuel et une pluralité de prédictions précédentes données à une pluralité d'instants précédents respectivement basées sur les données d'observation jusqu'à chacun de la pluralité d'instants précédents.

7. La méthode (600) selon la revendication 6, dans laquelle le poids attribué à chacune de la prédiction actuelle et de la pluralité de prédictions précédentes diminue avec l'âge de la prédiction.

8. Un système informatique (900), comprenant :

un dispositif de stockage (910) configuré pour stocker à partir de divers capteurs des données d'observation d'un objet réel et des informations environnementales liées à l'objet ; et
un processeur (904) couplé au dispositif de stockage (910), où le processeur (904) est configuré pour exécuter une méthode pour entraîner un modèle de fusion de prédicteurs multiples (204) pour la prédiction de trajectoire, où le modèle de fusion de prédicteurs multiples consiste en un ensemble de poids, chaque poids étant prévu pour un prédicteur, la méthode comprenant :

la récupération des données d'observation et des informations environnementales à partir du dispositif de stockage ;
pour un instant donné, la fourniture de prédictions respectives pour l'objet basées sur des données d'observation historiques avec une pluralité de prédicteurs (1, 2, ..., k) ;
l'association des informations environnementales aux prédictions respectives pour l'instant donné ;
l'alimentation d'un réseau neuronal avec les prédictions respectives et les informations environnementales associées pour l'instant donné comme entrée, ainsi que les données d'observation pour l'instant donné comme vérité terrain ;
la détermination, par le réseau neuronal, d'un ensemble de poids consistant en un poids respectif pour chacun de la pluralité de prédicteurs (1, 2, ..., k) en prenant les prédictions respectives et les informations environnementales associées pour l'instant donné comme entrée et en prenant les données d'observation pour l'instant donné comme vérité terrain ; et
la sortie, par le réseau neuronal, de l'ensemble de poids comme un modèle de fusion de prédicteurs multiples entraîné (204) pour la prédiction de trajectoire d'un objet réel, basé sur des données d'observation de l'objet et des informations environnementales liées à l'objet.

9. Le système informatique (900) selon la revendication 8, dans lequel la détermination de l'ensemble de poids comprend en outre l'ajustement des hyperparamètres du réseau neuronal basé sur l'optimisation bayésienne.

10. Le système informatique (900) selon la revendication 9, l'ajustement des hyperparamètres du réseau neuronal basé sur l'optimisation bayésienne comprend en outre les étapes suivantes :

(a) déterminer un ensemble initial d'hyperparamètres :
(b) évaluer la performance sous l'ensemble initial d'hyperparamètres ;
(c) proposer un nouvel ensemble d'hyperparamètres en utilisant l'optimisation bayésienne ;
(d) évaluer la performance sous le nouvel ensemble d'hyperparamètres proposé ;
(e) répéter les étapes (c) et (d) jusqu'à ce qu'une performance satisfaisante soit atteinte ; et
(f) sauvegarder l'ensemble actuel d'hyperparamètres proposé et les évaluations associées pour une utilisation ultérieure.

11. Le système informatique (900) selon l'une quelconque des revendications 8-10, les informations environnementales comprennent au moins l'un des éléments suivants :

localisation géographique ;
degré d'encombrement ;
type de route ; et
heure de la journée.

12. Un appareil de prédiction de trajectoire (800), comprenant :

un module d'obtention de données (802) configuré pour obtenir à partir de divers capteurs des données d'observation pour un objet réel et des informations environnementales liées à l'objet ; et

un prédicteur hybride (804) consistant en une pluralité de prédicteurs (1, 2, ..., k) chacun avec un poids attribué par le prédicteur hybride, et le prédicteur hybride est configuré pour :

recevoir les données d'observation et les informations environnementales du module d'obtention de données ;

fournir des prédictions respectives pour l'objet basées sur des données d'observation historiques avec la pluralité de prédicteurs (1, 2, ..., k) ;

alimenter les prédictions respectives et les informations environnementales dans un modèle de fusion de prédicteurs multiples pour la prédiction de trajectoire qui a été entraîné selon la méthode de l'une quelconque des revendications 1-4 ; et

fournir, par le modèle de fusion de prédicteurs multiples, une trajectoire prédite pour l'objet dans l'environnement indiqué par les informations environnementales comme sortie de la pluralité de prédicteurs (1, 2, ..., k).

13. L'appareil de prédiction de trajectoire (800) selon la revendication 12, dans lequel au moins l'une des prédictions respectives pour l'instant donné est une prédiction pondérée d'une prédiction actuelle donnée basée sur les données d'observation obtenues jusqu'à l'instant actuel et une pluralité de prédictions précédentes données à une pluralité d'instants précédents respectivement basées sur les données d'observation jusqu'à chacun de la pluralité d'instants précédents.

14. L'appareil de prédiction de trajectoire (800) selon la revendication 13, dans lequel le poids attribué à chacune de la prédiction actuelle et de la pluralité de prédictions précédentes diminue avec l'âge de la prédiction.

15. Un véhicule (1000), comprenant :

au moins un capteur (1002) configuré pour collecter des données d'observation pour des objets et des informations environnementales liées aux objets ; et

un appareil de prédiction de trajectoire (1004) selon l'une quelconque des revendications 12-14 ; et

un module de décision (1006) configuré pour prendre des décisions de contrôle du véhicule basées sur les trajectoires des objets entourant le véhicule prédites par l'appareil de prédiction

de trajectoire (1004).

*FIG. 1*

*FIG. 2*

*FIG. 3*

400

COLLECTING OBSERVATION DATA AND ENVIRONMENT
INFORMATION
402

GIVING RESPECTIVE PREDICTIONS WITH A PLURALITY OF
PREDICTORS
404

ASSOCIATING THE ENVIRONMENT INFORMATION WITH THE
RESPECTIVE PREDICTIONS
406

FEEDING THE RESPECTIVE PREDICTIONS, THE ASSOCIATED
ENVIRONMENT INFORMATION, AS WELL AS GROUND TRUTH INTO
A NEURAL NETWORK
408

DETERMINING, BY THE NEURAL NETWORK, A SET OF WEIGHTS
CONSISTING OF RESPECTIVE WEIGHT FOR EACH OF THE
PLURALITY OF PREDICTORS
410

OUTPUTTING, BY THE NEURAL NETWORK, THE SET OF WEIGHTS
AS A TRAINED MULTIPLE PREDICTORS FUSION MODEL FOR
TRAJECTORY PREDICTION
412

*FIG. 4*

500

```
┌─────────────────────────────────────────────────────────┐
│      DETERMINING AN INITIAL SET OF HYPER-PARAMETERS       │
│                          502                              │
└─────────────────────────────────────────────────────────┘
                            │
                            ▼
┌─────────────────────────────────────────────────────────┐
│    RATING FOR THE PERFORMANCE UNDER THE INITIAL SET OF    │
│                    HYPER-PARAMETERS                       │
│                          504                              │
└─────────────────────────────────────────────────────────┘
                            │
                            ▼
┌─────────────────────────────────────────────────────────┐
│  PROPOSING A NEW SET OF HYPER-PARAMETERS USING BAYESIAN   │
│                     OPTIMIZATION                          │
│                          506                              │
└─────────────────────────────────────────────────────────┘
                            │
                            ▼
┌─────────────────────────────────────────────────────────┐
│   RATING FOR THE PERFORMANCE UNDER THE NEWLY PROPOSED     │
│                  SET OF HYPER-PARAMETERS                  │
│                          508                              │
└─────────────────────────────────────────────────────────┘
                            │
                            ▼
NO              ◇ SATISFACTORY PERFORMANCE? ◇
                            510
                            │
                           YES
                            ▼
┌─────────────────────────────────────────────────────────┐
│  SAVING THE CURRENT PROPOSED SET OF HYPER-PARAMETERS      │
│          AND RELATED RATINGS FOR LATER USE               │
│                          512                              │
└─────────────────────────────────────────────────────────┘
```

*FIG. 5*

600

OBTAINING OBSERVATION DATA AND ENVIRONMENT
INFORMATION
602

GIVING RESPECTIVE PREDICTIONS WITH A PLURALITY OF
PREDICTORS
604

FEEDING THE RESPECTIVE PREDICTIONS AND THE ENVIRONMENT
INFORMATION INTO A TRAINED MULTIPLE PREDICTOR FUSION
MODEL FOR TRAJECTORY PREDICTION
606

PROVIDING, BY THE MULTIPLE PREDICTOR FUSION MODEL, A
PREDICTED TRAJECTORY FOR THE OBJECT UNDER THE
ENVIRONMENT
608

*FIG. 6*

*FIG. 7*

800

```
┌─────────────────────────────────────────────────┐
│                    800                          │
│  ┌───────────────────┐   ┌───────────────────┐  │
│  │ DATA OBTAINING    │   │     HYBRID        │  │
│  │    MODULE         │   │   PREDICTOR       │  │
│  │     802           │   │      804          │  │
│  └───────────────────┘   └───────────────────┘  │
│                                                 │
└─────────────────────────────────────────────────┘
```

*FIG. 8*

900

```
┌──────────┐ ┌──────────┐ ┌──────────┐ ┌──────────┐ ┌──────────────┐
│ Processor│ │ Storage  │ │  Input   │ │  Output  │ │Communication │
│   904    │ │ Device   │ │  Device  │ │  Device  │ │   Device     │
│          │ │   910    │ │   906    │ │   908    │ │    912       │
└──────────┘ └──────────┘ └──────────┘ └──────────┘ └──────────────┘
```

902

Working Memory 914

```
┌───────────────┐        ┌───────────────┐
│  Operating    │        │ Applications  │
│   system      │        │     918       │
│    916        │        │               │
└───────────────┘        └───────────────┘
```

*FIG. 9*

1000

SENSOR(S)
1002

TRAJECTORY
PREDICTION
APPARATUS
1004

DECISION MODULE
1006

*FIG. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018173240 A1

- CN 106950956 A

**Non-patent literature cited in the description**

- **GUO FANGCE et al.** Predictor fusion for short-term traffic forecasting. *TRANSPORTATION RESEARCH PART C:EMERGING TECHNOLOGIES, [Online*, 06 May 2018, vol. 92, ISSN 0968-090, 90-100